# EUROPÄISCHE PATENTSCHRIFT

(11) **EP 1 884 430 B1**
(45) Veröffentlichungstag und Bekanntmachung des Hinweises auf die Patenterteilung: **22.09.2010**
(21) Anmeldenummer: 07014784.8
(22) Anmeldetag: 27.07.2007
(51) Int. Cl.: B60T 17/02, B60T 17/00, B60T 13/68

(54) **Druckluftaufbereitungseinrichtung zum Versorgen einer Kraftfahrzeugbremsanlage mit Druckluft**
Compressed air treatment device for supplying compressed air to the braking system of a motor vehicle
Dispositif de préparation de l'air comprimé destiné à alimenter une installation de freinage d'un véhicule automobile avec de l'air comprimé

(30) Priorität: 27.07.2006 DE 102006034762
(43) Veröffentlichungstag der Anmeldung: 06.02.2008
(73) Patentinhaber: KNORR-BREMSE Systeme für Nutzfahrzeuge GmbH, 80809 München (DE)
(72) Erfinder: Riedel, Markus, 81375 München (DE); Ertl, Thomas, 80995 München (DE)
(74) Vertreter: Mattusch, Gundula

(56) Entgegenhaltungen:
- EP-A- 1 464 557
- DE-A1- 19 835 638
- DE-C1- 19 544 621
- DE-C1- 19 638 226

## Beschreibung

Die Erfindung betrifft eine Druckluftaufbereitungseinrichtung zum Versorgen einer Kraftfahrzeugbremsanlage mit Druckluft, mit zumindest einem zur Versorgung einer Betriebsbremsanlage vorgesehenen Betriebsbremsanschluss, wobei dem Betriebsbremsanschluss ein Betriebsbremsventil vorgeschaltet ist, und zumindest einem Ventil zum Steuern eines Regenerationsbetriebs der Druckluftaufbereitungseinrichtung.

Aus der DE 103 41 723 A1 ist bereits eine gattungsgemäße Druckluftaufbereitungseinrichtung bekannt. Bei dieser Schaltung wird die Druckluft zum Durchführen des Regenerationsbetriebs aus der Hauptleitung entnommen. Dadurch, dass auch andere Verbraucher an die Hauptleitung gekoppelt sind, kann der Regenerationsbetrieb aufgrund einer Druckluftentnahme durch andere Verbraucher in unerwünschter Weise beeinflusst werden.

Aus den Dokumenten DE 198 35 638 A1, DE 195 44 621 C1, DE 196 38 226 C1 und US 2004/0195910 A1 sind Druckluftaufbereitungseinrichtungen bekannt, bei denen Druckluft zum Durchführen einer Regeneration aus einer Hauptleitung entnommen wird.

Es ist daher die Aufgabe der vorliegenden Erfindung die gattungsgemäße Druckluftaufbereitungseinrichtung derart weiterzubilden, dass ein optimierter Regenerationsbetrieb durchgeführt werden kann.

Diese Aufgabe wird durch die Druckluftaufbereitungseinrichtung gemäß Anspruch 1 gelöst.

Vorteilhafte Ausgestaltungen und Weiterbildungen der Erfindung ergeben sich aus den abhängigen Ansprüchen.

Die erfindungsgemäße Druckluftaufbereitungseinrichtung baut auf dem gattungsgemäßen Stand der Technik dadurch auf, dass das zumindest eine Ventil in einem Leitungsstrang angeordnet ist, der zwischen dem Betriebsbremsventil und dem Betriebsbremsanschluss abzweigt. Durch diesen Aufbau kann das Ventil zur Steuerung des Regenerationsbetriebs aus Betriebsbremsbehältern, die im Betrieb an die Betriebsbremsanschlüsse angeschlossen sind, mit Druckluft versorgt werden. Diese Versorgung ist selbst dann grundsätzlich möglich, wenn der Druck in der Druckluftanlage, unter den Schließdruck des Betriebsbremsventils abgesunken ist. Andererseits darf die Einleitung einer Betriebsbremsung nicht gefährdet werden, was jedoch durch die elektronische Steuereinheit gewährleistet werden kann.

Die erfindungsgemäße Druckluftaufbereitungseinrichtung kann in vorteilhafter Weise dadurch weitergebildet sein, dass dem Betriebsbremsventil ein Druckbegrenzer vorgeschaltet ist. Dies hat den Vorteil, dass einerseits während des Normalbetriebs ein hohes Druckniveau für eine Lufttrocknereinheit bereitgestellt werden kann. Andererseits kann das Ventil für die Steuerung des Regenerationsbetriebs, das dem Druckbegrenzer nachgeschaltet ist, auf einen niedrigeren Druck ausgelegt werden.

Bei einer bevorzugten Ausführungsform der erfindungsgemäßen Druckluftaufbereitungseinrichtung ist weiterhin vorgesehen, dass das zumindest eine Ventil ein Magnetventil ist und die Druckluftaufbereitung insgesamt mehrere Magnetventile aufweist, wobei alle Magnetventile in Leitungssträngen angeordnet sind, die zwischen dem Betriebsbremsventil und dem Betriebsbremsanschluss abzweigen. Dies hat den Vorteil, dass alle Magnetventile auf dem gleichen Druckniveau arbeiten und die Leitungsführung innerhalb der Druckluftaufbereitungseinrichtung vereinfacht ist. Dadurch kann die Druckluftaufbereitungseinrichtung kompakter ausgeführt werden, da nur eine Druckluftzuleitung in den Bereich erforderlich ist, in dem die Magnetventile räumlich angeordnet sind. Durch die einheitliche Versorgung aller Magnetventile mit Druckluft aus derselben Zuführleitung kann demnach die Luftführung vereinfacht werden. Außerdem wird hierdurch sichergestellt, dass alle Magnetventile mit Druckluft aus den Betriebsbremsbehältern versorgt werden können, nachdem der Druck unter den Schließdruck des Betriebsbremsventils abgefallen ist. Darüber hinaus ermöglicht diese Weiterbildung die Verwendung baugleicher Magnetventile, die auf einen niedrigeren Druck ausgelegt sind.

Darüber hinaus kann bei der erfindungsgemäßen Druckluftaufbereitungseinrichtung vorgesehen sein, dass die Betriebsbremsventile Überströmventile sind. Durch Überströmventile vor den Betriebsbremskreisen ist eine sichere Möglichkeit zum Absichern der Betriebsbremskreise gegeben. Sobald eine Leckage auftritt fällt der Druck im entsprechenden Leitungsstrang unter den Schließdruck des Überströmventils, so dass das Überströmventil schließt und den entsprechenden Betriebsbremskreis von einer Druckluftversorgungsleitung trennt.

Des Weiteren kann die erfindungsgemäße Druckluftaufbereitungseinrichtung so weitergebildet sein, dass das zumindest eine Ventil eine Steuerleitung zum Öffnen eines Ablassventils schaltet, welches eine Eingangsseite einer Lufttrocknereinheit mit einer Entlüftung verbindet. Somit kann auch nach Unterschreiten des Schließdrucks des Betriebsbremsventils die Eingangsseite des Lufttrockners mit der Entlüftung verbunden werden.

Darüber hinaus kann die erfindungsgemäße Druckluftaufbereitungseinrichtung so weitergebildet sein, dass das zumindest eine Ventil einen Leitungsstrang schaltet, über den der Lufttrocknereinheit Druckluft in entgegengesetzter Richtung zur Druchströmung im Normalbetrieb zugeführt wird. Dadurch kann auch nach dem Unterscheiten des Schließdrucks des Betriebsbremsventils der Lufttrockner mit Druckluft in umgekehrter Strömungsrichtung durchströmt werden.

Des Weiteren kann die erfindungsgemäße Druckluftaufbereitungseinrichtung dadurch weitergebildet sein, dass eine Eingangsseite eines Nebenverbraucher-Druckbegrenzers, der weiteren Verbrauchern vorgeschaltet ist, mit dem Betriebsbremsanschluss verbindbar ist. Hierdurch wird der Vorteil erreicht, dass Verbraucher, die dem Nebenverbraucher-Druckbegrenzer nachgeschaltet sind, aus Betriebsbremsbehältern, die im Betrieb an die Betriebsbremsanschlüsse angeschlossen sind, mit Druckluft versorgt werden können, wenn der Druck in der Druckluftanlage, nachdem das Fahrzeug abgestellt wurde, durch geringe Undichtigkeiten unter die Schließdrücke von Kreissicherungsventilen abgesunken ist.

Ferner kann die erfindungsgemäße Druckluftaufbereitungseinrichtung dadurch weitergebildet sein, dass eine Eingangsseite eines Nebenverbraucher-Druckbegrenzers, der weiteren Verbrauchern vorgeschaltet ist, an eine Hauptleitung gekoppelt ist. Durch einen derartigen Aufbau kann eine schnelle Versorgung aller Verbraucher sichergestellt werden.

Außerdem kann vorteilhafterweise vorgesehen sein, dass ein Zusatzverbraucheranschluss und ein Getriebeschaltungsanschluss vorgesehen sind, wobei eine Zuleitung zu dem Zusatzverbraucheranschluss an die Ausgangsseite des Nebenverbraucher-Druckbegrenzers gekoppelt ist und eine Zuleitung zu dem Getriebeschaltungsanschluss mit der Eingangsseite des Nebenverbraucher-Druckbegrenzers verbunden ist. Durch die Nachschaltung dieser Verbraucher werden diese mit einem verringerten Druckniveau versorgt. Somit kann der Forderung von Fahrzeugherstellern, unterschiedliche Druckniveaus bereitzustellen, Rechnung getragen werden.

Darüber hinaus kann vorgesehen sein, dass ein Zusatzverbraucheranschluss und ein Getriebeschaltungsanschluss vorgesehen sind, wobei die Zuleitung zu einem der beiden Anschlüsse an eine Ausgangsseite eines Ventils gekoppelt ist, welches dem anderen der beiden Anschlüsse vorgeschaltet ist. Durch eine derartige Anordnung kann die Versorgung eines Verbrauchers mit einer höheren Priorität als die Versorgung eines anderen Verbrauchers ausgestattet werden.

Hierdurch erreicht man eine variable Bevorrechtung zweier Druckluftausgänge zueinander.

Des Weiteren stellt die Erfindung ein Kraftfahrzeug mit einer erfindungsgemäßen Druckluftaufbereitungseinrichtung bereit. Dieses Fahrzeug liefert die vorstehend beschriebenen Vorteile in übertragener Weise.

Eine bevorzugte Ausführungsform der Erfindung wird nachfolgend mit Bezug auf die begleitenden Zeichnungen beispielhaft erläutert.

Es zeigen:
- Figur 1: ein Schaltungsdiagramm eines ersten Ausführungsbeispiels einer erfindungsgemäßen Druckluftaufbereitungseinrichtung;
- Figur 2: ein Schaltungsdiagramm eines zweiten Ausführungsbeispiels einer erfindungsgemäßen Druckluftaufbereitungseinrichtung;
- Figur 3a: eine Schaltungsvariante der Schaltungen des ersten und zweiten Ausführungsbeispiels;
- Figur 3b: eine weitere Schaltungsvariante der Schaltungen des ersten und zweiten Ausführungsbeispiels;
- Figur 3c: eine weitere Schaltungsvariante der Schaltungen des ersten und zweiten Ausführungsbeispiels;
- Figur 3d: eine weitere Schaltungsvariante der Schaltungen des ersten und zweiten Ausführungsbeispiels;
- Figur 4a: eine weitere Schaltungsvariante der Schaltungen des ersten und zweiten Ausführungsbeispiels;
- Figur 4b: eine weitere Schaltungsvariante der Schaltungen des ersten und zweiten Ausführungsbeispiels;
- Figur 4c: eine weitere Schaltungsvariante der Schaltungen des ersten und zweiten Ausführungsbeispiels;
- Figur 5a: eine weitere Schaltungsvariante der Schaltungen des ersten und zweiten Ausführungsbeispiels;
- Figur 5b: eine weitere Schaltungsvariante der Schaltungen des ersten und zweiten Ausführungsbeispiels; und
- Figur 5c: eine weitere Schaltungsvariante der Schaltungen des ersten und zweiten Ausführungsbeispiels.

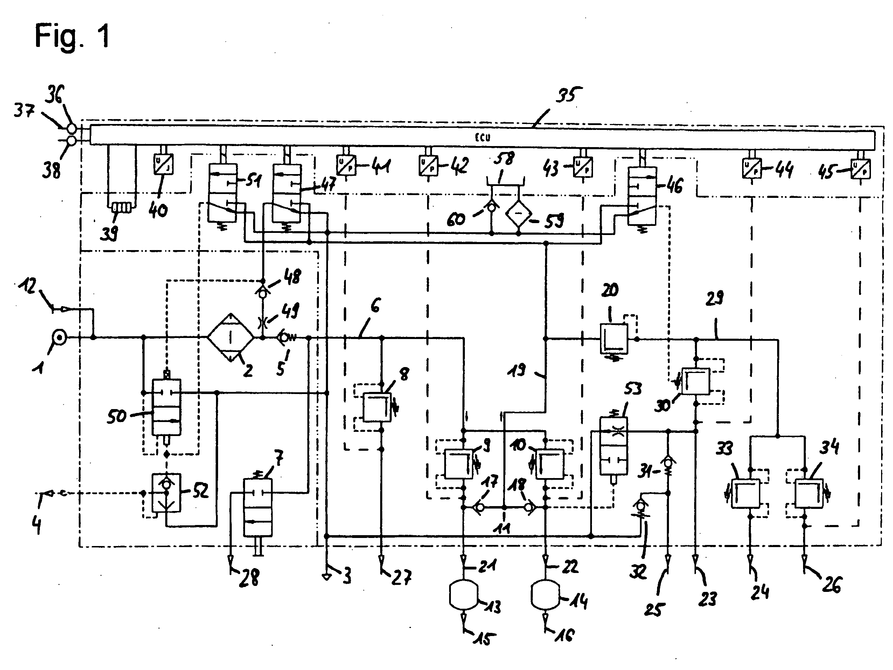

Figur 1 zeigt ein Schaltungsdiagramm eines ersten Ausführungsbeispiels einer erfindungsgemäßen Druckluftaufbereitungseinrichtung. Die erfindungsgemäße Druckluftaufbereitungseinrichtung hat einen Drucklufteingang 1, dem Druckluft von einem nicht dargestellten Kompressor zuführbar ist. Parallel zu dem Drucklufteingang 1 ist ein Fremdbefüllungsanschluss 12 vorgesehen, über den das Druckluftsystem des Nutzfahrzeugs beispielsweise in einer Werkstatt ohne den Betrieb des Kompressors befüllt werden kann. Über den Drucklufteingang 1 gelangt Druckluft zu einer Lufttrocknereinheit 2 und von dort über ein Rückschlagventil 5 und eine Hauptleitung 6 zu den später erläuterten Druckluftverbrauchern. Das Rückschlagventil 5 ist vorgesehen, um ein Rückströmen von Druckluft von den Verbrauchern in Richtung der Lufttrocknereinheit 2 zu vermeiden, wobei es sich vorzugsweise um ein federvorgespanntes Rückschlagventil handelt, welches ein Durchströmen erst ab Erreichen eines bestimmten Druckschwellenwertes gestattet. Von der Hauptleitung 6 zweigt eine zu einem Reifenfüllanschluss 28 führende Leitung ab, in der ein Reifenfüllventil 7 angeordnet ist. Das Reifenfüllventil 7 ist vorzugsweise ein 2/2-Wegeventil mit manueller Betätigung und kann bei Bedarf aus einer geschlossenen in eine geöffnete Stellung geschaltet werden, um über den Reifenfüllanschluss 28 Druckluft zur Befüllung von Fahrzeugreifen zu entnehmen. Des Weiteren ist in einer von der Hauptleitung 6 abzweigenden und zu einem Luftfederungsanschluss 27 führenden Leitung ein Luftfederungsventil 8 angeordnet. Das Luftfederungsventil 8 ist vorzugsweise ein Überströmventil, so dass, wenn an dem mit der Hauptleitung 6 verbundenen Eingang des Luftfederungsventils 8 die Druckluft einen bestimmten vorbestimmten Öffnungsdruck übersteigt, das Luftfederungsventil 8 von einer geschlossenen in eine geöffnete Stellung schaltet und ein Überströmen von Druckluft von der Hauptleitung 6 zum Luftfederungsanschluss 27 erlaubt. Das Luftfederungsventil 8 bleibt solange in einem geöffneten Zustand, bis ein Schließdruck unterschritten wird, wobei der Schließdruck kleiner ist als der Öffnungsdruck. Diese allgemeine Funktionsweise dieses Überströmventils gilt in übertragener Weise auch für die nachfolgend beschriebenen Überströmventile. Die Überströmventile wirken somit als Kreissicherungsventile, um die Betriebskreise, die ihnen nachgeschaltet sind, zu sichern. Diese Sicherung wird bewirkt, indem die Überströmventile schließen, sobald der Druck im entsprechenden Leitungsstrang unter den Schließdruck abfällt, d.h. im Falle einer Leckage und dem damit verbundenen Druckabfall in diesem Leitungsstrang, wird dieser Leitungsstrang von der Druckluftversorgung und den anderen Kreisen getrennt. Weiter stromabwärts zweigen von der Hauptleitung 6 zwei parallel angeordnete Betriebsbremsventile 9 und 10 ab, welche vorzugsweise Überströmventile sind. Die Ausgangsseiten der Betriebsbremsventile 9 und 10 führen jeweils zu einem Betriebsbremsanschluss 21, 22. Die Betriebsbremsanschlüsse 21, 22 führen jeweils zu einem Betriebsbremsbehälter 13, 14, an die die Betriebsbremskreise 15, 16 angeschlossen sind. Zwischen den jeweiligen Betriebsbremsventilen 9, 10 und ihren entsprechenden Betriebsbremsanschlüssen 21, 22 zweigt jeweils eine Leitung ab, wobei sich beide Leitungen in einem Verbindungspunkt 11 treffen. Zwischen den Abzweigungen und dem Verbindungspunkt 11 sind jeweils Rückschlagventile 17, 18 angeordnet, die jeweils ein Strömen von Druckluft hin zum Verbindungspunkt 11 gestatten und ein Strömen in die umgekehrte Richtung verhindern. Vom Verbindungspunkt 11 zweigt eine Seriellversorgungsleitung 19 ab, welche nachfolgend erläuterte weitere Verbraucher mit Druckluft versorgt. Somit ist ein Eingang eines Nebenverbraucher-Druckbegrenzers 20 an die Seriellversorgungsleitung 19 gekoppelt. Der Ausgang des Nebenverbraucher-Druckbegrenzers 20 ist mit einer Nebenverbraucherleitung 29 verbunden, von der eine Leitung abzweigt, die zu einem Anhängeranschluss 23 führt und in der ein Nebenverbraucherventil 30 angeordnet ist. Das Nebenverbraucherventil 30 ist vorzugsweise als Überströmventil ausgeführt, dessen Schaltverhalten mittels eines Steuereingangs einstellbar ist. An den Anhängeranschluss 23 kann eine nicht dargestellte Anhängerbremsanlage angeschlossen werden. Zwischen Nebenverbraucherventil 30 und Anhängeranschluss 23 zweigt eine Leitung ab, die zu einem Feststellbremsenanschluss 25 führt, wobei in dieser Leitung ein Rückschlagventil 31 vorgesehen ist, welches nur eine Strömung in Richtung hin zum Feststellbremsenanschluss 25 zulässt. Das Rückschlagventil 31 ist vorzugsweise ein federvorgespanntes Rückschlagventil, so dass ein Durchströmen des Rückschlagventils 31 erst ab Erreichen eines bestimmten Schwellenwerts gestattet wird. Durch Druckbeaufschlagung des Feststellbremsenanschlusses 25 wird eine Feststellbremse aus der arretierten Stellung gelöst. Zwischen Rückschlagventil 31 und Feststellbremsenanschluss 25 zweigt eine zu einer Entlüftung 3 führende Leitung ab, in die ein Rückschlagventil 32 geschaltet ist. Das Rückschlagventil 32 öffnet ab einem bestimmten, einstellbaren Schwellenwert und schützt so die mit dem Feststellbremsenanschluss 25 verbundene Leitung vor überhöhtem Druck. Der Schwellenwert zum Öffnen des Rückschlagventils 32 wird dabei höher eingestellt, als der entsprechende Schwellenwert des Rückschlagventils 31. Das Rückschlagventil 32 fungiert demnach als Sicherheitsventil, wobei dem Fachmann auch Sicherheitsventile mit anderen Ausgestaltungen bekannt sind, die an dieser Stelle nicht näher erläutert werden. Darüber hinaus zweigt zwischen Nebenverbraucherventil 30 und Anhängeranschluss 23 eine zur Entlüftung 3 führende Leitung ab, in der ein als 2/2-Wegeventil ausgeführtes Ventil 53 angeordnet ist. Die Steuerleitung des Ventils 53 ist mit der Leitung zwischen dem Betriebsbremsventil 10 und dem Betriebsbremsanschluss 22 verbunden, so dass abhängig vom Druck am Betriebsbremsanschluss 22 das Ventil 53 entweder in eine geschlossene Stellung schaltet, in der es verhindert, dass Druckluft aus der mit dem Anhängeranschluss 23 verbundenen Anhängerbremsanlage zur Entlüftung abströmt, während das Ventil 53 im anderen Schaltzustand ein gedrosseltes Abströmen von Druckluft aus der mit dem Anhängeranschluss 23 verbundenen Anhängerbremsanlage zur Entlüftung 3 gestattet. Bei Druckbeaufschlagung des Betriebsbremsanschlusses 22 schaltet dabei das Ventil 53 in seine geschlossene Stellung. Alternativ kann der Steuereingang des Ventils 53 anstatt mit dem Betriebsbremsanschluss 22 ebenso mit dem Betriebsbremsanschluss 21 verbunden sein. Von der Nebenverbraucherleitung 29 zweigen des Weiteren zwei parallel angeordnete Leitungen ab, von denen eine zu einem Zusatzverbraucheranschluss 24 und die andere zu einem Getriebeschaltungsanschluss 26 führt. Zwischen Nebenverbraucherleitung 29 und Zusatzverbraucheranschluss 24 ist ein Zusatzverbraucherventil 33 vorgesehen, während zwischen Nebenverbraucherleitung 29 und Getriebeschaltungsanschluss 26 ein Getriebeschaltungsventil 34 angeordnet ist. Beide Ventile sind vorzugsweise Überströmventile. Bezugszeichen 35 kennzeichnet eine elektronische Steuereinheit (ECU) zum Steuern des Betriebs der Luftaufbereitungseinrichtung. Die elektronische Steuereinheit. 35 ist mit einem Zentralstecker 36 verbunden, über den die elektronische Steuereinheit 35 beispielsweise mit einem CAN-Bus 37 verbunden werden kann, um eine Schnittstelle zur sonstigen Fahrzeugelektronik auszubilden. Es ist ferner ein optionaler Feuchtestecker 38 vorgesehen, über den ein Signal eines externen nicht dargestellten Feuchtesensors eingelesen werden kann. Dieser ist üblicherweise am tiefsten Punkt eines der Betriebsbremsbehälter 13, 14 angebracht. Mit der elektronischen Steuereinheit 35 stehen ferner eine Heizung 39 sowie ein Temperatursensor 40 in Verbindung. Darüber hinaus sind mit der elektronischen Steuereinheit 35 diverse Drucksensoren 41-45 verbunden, wobei der Drucksensor 41 einen Druck am Luftfederungsanschluss 27, der Drucksensor 42 einen Druck am Betriebsbremsanschluss 21, der Drucksensor 43 einen Druck am Betriebsbremsanschluss 22, der Drucksensor 44 einen Druck am Anhängeranschluss 23 und der Drucksensor 45 einen Druck am Getriebeschaltungsanschlüss 26 erfasst und in die elektronische Steuereinheit 35 zur Auswertung einspeist. Von der elektronischen Steuereinheit 35 wird ein Nebenverbraucher-Vorsteuerventil 46 geschaltet, welches als 3/2-Wege-Magnetventil ausgeführt ist. In der in Figur 1 dargestellten Schaltstellung verbindet das Nebenverbraucher-Vorsteuerventil 46 einen Steuereingang des Nebenverbraucherventils 30 mit der Entlüftung 3. In der nicht in Figur 1 dargestellten Schaltstellung verbindet das Nebenverbraucher-Vorsteuerventil 46 den Steuereingang des Nebenverbraucherventils 30 mit der Seriellversorgungsleitung 19, wodurch der in der Seriellversorgungsleitung 19 herrschende Druck an den Steuereingang des Nebenverbraucherventils 30 angelegt wird und dieses Nebenverbraucherventil 30 daraufhin ein Überströmen von Druckluft von der Nebenverbraucherleitung 29 zu dem Anhängeranschluss 23 und dem Feststellbremsenanschluss 25 verhindert. Gleich nach dem Einschalten der Zündung wird das Nebenverbraucher-Vorsteuerventil 46 bestromt, so dass dem Steuereingang des Nebenverbraucherventils 30 Druckluft zugeführt wird. Damit soll verhindert werden, dass bei vorzeitig gelöster Handbremse in einem Zustand, in dem noch nicht genügend Druck aufgebaut ist, das Fahrzeug zunächst durch die Feststellbremse gebremst wird und im Laufe des Druckaufbaus, wenn sich der Fahrer eventuell nicht im Fahrersitz befindet, das Fahrzeug selbsttätig zu rollen beginnt. Erst wenn über das Nebenverbraucher-Vorsteuerventil 46 der Steuereingang des Nebenverbraucherventils 30 wieder entlüftet wird, kann die Feststellbremse über den Feststellbremsenanschluss 25 gelöst werden. Dazu ist jedoch nach dem Erreichen eines Druckes, der ausreicht, um die Bremsanlage über die Betriebsbremskreise 15 und 16 betätigen zu können, ein Bestätigungssignal durch den Fahrzeugführer erforderlich. Diese Funktionsweise der Feststellbremse wird als "Northland Parkbrake Function" bezeichnet. Zum Zwecke der Regeneration der Lufttrocknereinheit 2 ist ein Regenerationsventil 47 vorgesehen, welches als 3/2-Wege-Magnetventil ausgeführt ist. Das Regenerationsventil 47 ist mit einem Rückschlagventil 48 und einer Drossel 49 in Reihe geschaltet. Das Rückschlagventil 48 vermeidet während der Förderphasen des Kompressors ein Überströmen von Druckluft über das Regenerationsventil 47 zur Entlüftung 3. Die Drossel 49 ist vorgesehen, um die Strömungsgeschwindigkeit in einer die Regeneration begünstigenden Weise zu begrenzen. Stromaufwärts des Rückschlagventils 48, d.h. zwischen Rückschlagventil 48 und dem Regenerationsventil 47 ist eine Steuerleitung angeschlossen, die zu einem Ablassventil 50 führt. In der in Figur 1 dargestellten Schaltstellung des Regenerationsventils 47 ist somit die Steuerleitung des Ablassventils 50 mit der Entlüftung 3 verbunden, und das Rückschlagventil 48 verhindert, dass während der Förderphasen des Kompressors Druckluft über das Regenerationsventil 47 zur Entlüftung 3 überströmt. In der nicht in Figur 1 dargestellten Schaltstellung verbindet das Regenerationsventil 47 die Steuerleitung des Ablassventils 50 mit dem in der Seriellversorgungsleitung 19 herrschenden Druck. Außerdem wird dieser Druck ebenso an die Verbindungsleitung zwischen Lufttrocknereinheit 2 und Rückschlagventil 5 angelegt. Das Ablassventil 50 ist zwischen die Eingangsseite der Lufttrocknereinheit 2 und die Entlüftung 3 geschaltet. In der in Figur 1 dargestellten Schaltstellung ist diese Verbindung zwischen Eingangsseite der Lufttrocknereinheit 2 und Entlüftung 3 gesperrt, wohingegen in der nicht in Figur 1 dargestellten Schaltstellung die Eingangsseite der Lufttrocknereinheit 2 mit der Entlüftung 3 verbunden ist. Ferner ist ein Druckregler-Magnetventil 51 vorgesehen, welches als 3/2-Wege-Magnetventil ausgebildet ist und über die elektronische Steuereinheit 35 angesteuert wird. Über das Druckregler-Magnetventil 51 kann einem Kompressor-Steuerausgang 4 über ein Steuerventil 52 der in der Seriellversorgungsleitung 19 herrschende Druck zugeführt werden. Neben der Druckzuführung zum Kompressor-Steuerausgang 4 kann derselbe Druck mittels des Druckregler-Magnetventils 51 an einen weiteren Steuereingang des Ablassventils 50 angelegt werden. Dies geschieht in der nicht in Figur 1 dargestellten Schaltstellung des Druckregler-Magnetventils 51, wohingegen in der in Figur 1 dargestellten Schaltstellung der weitere Steuereingang des Ablassventils 50 sowie der entsprechende Eingang des Steuerventils 52 mit der Entlüftung 3 verbunden ist. Das Ablassventil 50 ist so ausgelegt, dass bei Anliegen eines Drucks an dem Steuereingang, der mittels des Druckregler-Magnetventils 51 geschaltet wird, das Ablassventil 50 auf jeden Fall in die geöffnete Schaltstellung geschaltet wird. Das Steuerventil 52 ist so ausgelegt, dass es bei fehlender Druckbeaufschlagung durch das Druckregler-Magnetventil 51 den Kompressor-Steuerausgang 4 mit der Entlüftung 3 verbindet, wobei auf diese Weise rasche Entlüftung und somit ein sicherer Betrieb des Kompressors im Hinblick auf seine Wiederinbetriebnahme zur Verfügung gestellt wird. Ein weiterer Anschluss des Steuerventils 52 ist zwischen der Entlüftung 3 und dem Ablassventil 50 angeschlossen und somit mit der Entlüftung 3 verbunden. Ferner ist ein Sammelbehälter 58 vorgesehen, der einen Innenraum des Gehäuses der elektronischen Steuereinheit 35 repräsentieren soll. Über ein Druckausgleichselement 59 ist der Sammelbehälter 58 mit der Entlüftung 3 verbunden, um Druckschwankungen innerhalb des Gehäuses der elektronischen Steuereinheit 35 auszugleichen. Das Druckausgleichselement 59 kann von Luft, jedoch nicht von Flüssigkeiten, durchströmt werden und soll das Gehäuse vor Beschädigungen schützen, die ansonsten durch Druckschwankungen, bedingt durch Höhen- oder Temperaturunterschiede, verursacht werden können. Aus Sicherheitsgründen ist der Sammelbehälter 58 zusätzlich mit einem Rückschlagventil 60 versehen, um Druckerhöhungen im Gehäuse der elektronischen Steuereinheit 35 auszugleichen, welche die maximale Durchströmrate des Druckausgleichselements 59 übersteigen. Dabei ist das Rückschlagventil so angeordnet, dass nur eine Strömung vom Sammelbehälter 58 zur Entlüftung 3 ermöglicht wird.

Die dargestellte Druckluftaufbereitungseinrichtung arbeitet wie folgt. Während des normalen Förderbetriebs fördert der Kompressor Druckluft in den Drucklufteingang 1. Folglich gelangt Druckluft durch die Lufttrocknereinheit 2 über das Rückschlagventil 5 zur Hauptleitung 6. Bei Erreichen eines vorbestimmten Druckes in der Hauptleitung 6 gestatten die Überströmventile 8, 9 und 10 ein Überströmen von Druckluft so dass über die Rückschlagventile 17, 18 schließlich auch an der Seriellversorgungsleitung 19 ein bestimmter Druck herrscht. Während des normalen Betriebs wird die Lufttrocknereinheit,2 mit Feuchtigkeit und Fremdpartikeln, beispielsweise Kompressoröl und dessen Zersetzungsprodukten, beladen. Um eine Regeneration der Lufttrocknereinheit 2 zu veranlassen, werden das Regenerationsventil 47 und das Druckregler-Magnetventil 51 in ihre nicht dargestellte Position überführt, so dass einerseits über das Regenerationsventil 47 die Regenerationsluftströmung durch das Rückschlagventil 48, die Drossel 49, die Lufttrocknereinheit 2, das aufgrund der Umschaltung des Druckregler-Magnetventils 51 ebenfalls umgeschaltete Ablassventil 50 und die Entlüftung 3 erfolgen kann. Mit der Umschaltung des Druckregler-Magnetventils 51 wird der Kompressor-Steuerausgang 4 druckbeaufschlagt, so dass während des Regenerationsbetriebs der Kompressor abgeschaltet bleibt. Zur Wiederaufnahme des Förderbetriebs nach der Regeneration werden das Regenerationsventil 47 und das Druckregler-Magnetventil 51 wieder in ihre dargestellten Stellungen überführt, so dass die mit ihnen in Verbindung stehenden Steuereingänge entlüftet werden, wobei die Entlüftung des Kompressor-Steuereingangs 4 auf direktem Wege ohne einen Umweg über ein Regenerationsventil erfolgen kann.

Zur Vermeidung von Wiederholungen wird auf die Beschreibung von Elementen, die im Zusammenhang mit Figur 1 beschrieben wurden, verzichten. Gleiche Bezugszeichen repräsentieren dabei in der vorliegenden Beschreibung gleiche Elemente.

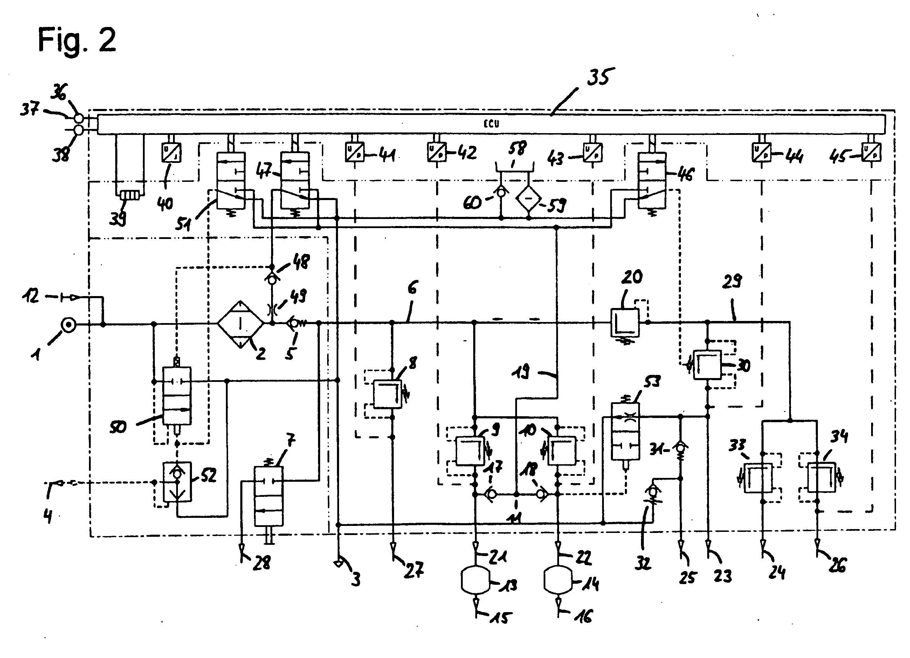

Figur 2 zeigt ein Schaltungsdiagramm eines zweiten Ausführungsbeispiels einer erfindungsgemäßen Druckluftaufbereitungseinrichtung. Die hier dargestellte Druckluftaufbereitungseinrichtung unterscheidet sich von der in Figur 1 dargestellten Druckluftaufbereitungseinrichtung dadurch, dass die Eingangseite des Nebenverbraucher-Druckbegrenzers 20 nicht wie in dem Ausführungsbeispiel aus Figur 1 mit der Seriellversorgungsleitung 19 verbunden ist, sondern mit der Hauptleitung 6. Dadurch sind die dem Nebenverbraucher-Druckbegrenzer 20 nachgeschalteten Verbraucher nicht mehr seriell zu den Betriebsbremsventilen 9 und 10 geschaltet, sondern parallel zu diesen.

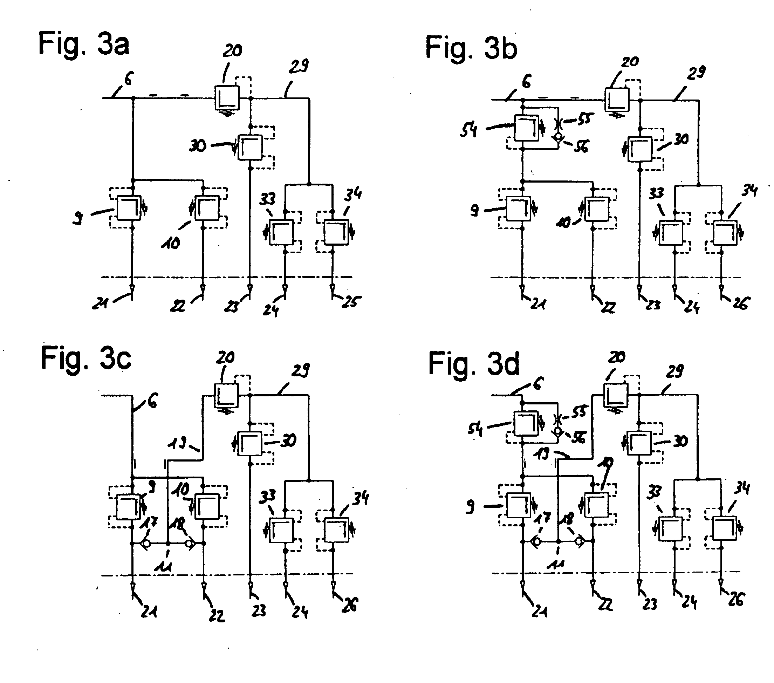

In den nachfolgenden Figuren 3a bis 5c sind verschiedene Schaltungsvarianten der Schaltungen des ersten und zweiten Ausführungsbeispiels dargestellt. Die nachfolgende Tabelle 1 veranschaulicht dabei, welche Schaltungsvarianten miteinander kombinierbar sind.

**Tabelle 1:**

| | **Nebenverbraucher-Vorsteuerventil 46 in serieller Reihenschaltung mit Seriellversorgungsleitung 19** | **Fig. 5a** | **Fig. 5b** | **Fig. 5c** |
|---|---|---|---|---|
| **Fig. 3a** | Ja | Ja | Ja | Ja |
| **Fig. 3b** | Ja | Ja | Ja | Ja |
| **Fig. 3c** | Ja | Ja | Ja | Ja |
| **Fig. 3d** | Ja | Ja | Ja | Ja |
| **Fig. 4a** | Ja | Ja | Nein | Nein |
| **Fig. 4b** | Ja | Ja | Nein | Nein |
| **Fig. 4c** | Ja | Ja | Nein | Nein |

Figur 3a zeigt eine Schaltungsvariante der Schaltungen des ersten und zweiten Ausführungsbeispiels. In diesem Ausführungsbeispiel sind die dem Nebenverbraucher-Druckbegrenzer 20 nachgeschalteten Verbraucher zu den dem Nebenverbraucher-Druckbegrenzer 20 vorgeschalteten Verbrauchern parallel geschaltet. Bei dieser Schaltungsanordnung herrschen zwei Druckniveaus, wobei ein erstes Niveau an einer Eingangsseite des Nebenverbraucher-Druckbegrenzers 20 sowie in der Hauptleitung 6 anliegt und ein zweites Druckniveau an der Ausgangsseite und somit in der Nebenverbraucherleitung 29 anliegt.

Figur 3b zeigt eine weitere Schaltungsvariante der Schaltungen des ersten und zweiten Ausführungsbeispiels. Zusätzlich zu den Komponenten des ersten und zweiten Ausführungsbeispiels weist die Schaltungsvariante aus Figur 3b einen Druckbegrenzer 54 auf, der zwischen Hauptleitung 6 und Eingangsseite der Betriebsbremsventile 9, 10 angeordnet ist.

Dem Druckbegrenzer 54 ist eine Reihenschaltung aus einer Drossel 55 und einem Rückschlagventil 56 parallel geschaltet, wobei das Rückschlagventil 56 so ausgerichtet ist, dass nur ein Strömen von der Ausgangsseite, d.h. die mit den Betriebsbremsventilen 9, 10 in Verbindung stehende Seite, zur Hauptleitung 6 zugelassen wird. Bei dieser Schaltungsvariante sind erneut die zu den Betriebsbremsanschlüssen 21, 22 führenden Leitungsstränge den Leitungssträngen, welche zum Anhängeranschluss 23, zum Zusatzverbraucheranschluss 24 und zum Getriebeschaltungsanschluss 26 führen, parallel geschaltet. Aufgrund des Druckbegrenzers 54 wird im Vergleich zur Schaltungsvariante aus Figur 3a ein weiteres Druckniveau ausgebildet. Die Schaltung weist demnach drei Druckniveaus auf, wobei ein erstes Druckniveau in der Hauptleitung 6, ein zweites Druckniveau an der Ausgangsseite des Nebenverbraucher-Druckbegrenzers 20 (und somit in der Nebenverbraucherleitung 29) und ein drittes Druckniveau an der Ausgangsseite des Druckbegrenzers 54 herrscht.

Figur 3c zeigt eine weitere Schaltungsvariante der Schaltungen des ersten und zweiten Ausführungsbeispiels. Bei dieser Schaltungsvariante sind die Leitungsstränge, welche zum Anhängeranschluss 23, zum Zusatzverbraucheranschluss 24 und zum Getriebeschaltungsanschluss 26 führen, seriell zu den Leitungssträngen, die zu den Betriebsbremsanschlüssen 21, 22 führen, geschaltet. Die Eingangsseite des Nebenverbraucher-Druckbegrenzers 20 wird erst dann mit Druck beaufschlagt, nachdem die Betriebsbremsventile 9, 10 ein Überströmen von Druckluft gestatten und somit an den Betriebsbremsanschlüssen 21, 22 Druckluft anliegt. Bei dieser Schaltungsvariante herrschen zwei Druckniveaus vor, wobei ein erstes Druckniveau in der Hauptleitung 6 und der Seriellversorgungsleitung 19 herrscht und ein weiteres Druckniveau an der Ausgangsseite des Nebenverbraucher-Druckbegrenzers 20 (und somit in der Nebenverbraucherleitung 29) herrscht.

Figur 3d zeigt eine weitere Schaltungsvariante der Schaltungen des ersten und zweiten Ausführungsbeispiels. Bei dieser Schaltungsvariante ist, wie in der Schaltungsvariante aus Figur 3b, ein Druckbegrenzer 54 mit der parallel geschalteten Reihenschaltung aus Drossel 55 und Rückschlagventil 56 vorgesehen. Der Druckbegrenzer 54 ist zwischen Hauptleitung 6 und Eingangsseite der Betriebsbremsventile 9, 10 vorgesehen. Die Leitungsstränge zu den Verbrauchern, die dem Nebenverbraucher-Druckbegrenzer 20 nachgeschaltet sind, sind den Leitungssträngen zu den Betriebsbremsanschlüssen 21, 22 seriell nachgeschaltet. Somit liegt an der Eingangsseite des Nebenverbraucher-Druckbegrenzers 20 erst dann Druckluft an, nachdem an den Betriebsbremsanschlüssen 21, 22 Druckluft anliegt. In dieser Schaltung herrschen drei Druckniveaus vor, wobei ein erstes Druckniveau in der Hauptleitung 6, ein zweites Druckniveau zwischen Ausgangsseite des Druckbegrenzers 54 und Eingangsseite des Nebenverbraucher-Druckbegrenzers 20 (und somit in der Seriellversorgungsleitung 19) und ein drittes Druckniveau an der Ausgangsseite des Nebenverbraucher-Druckbegrenzers 20 (und somit in der Nebenverbraucherleitung 29) herrscht.

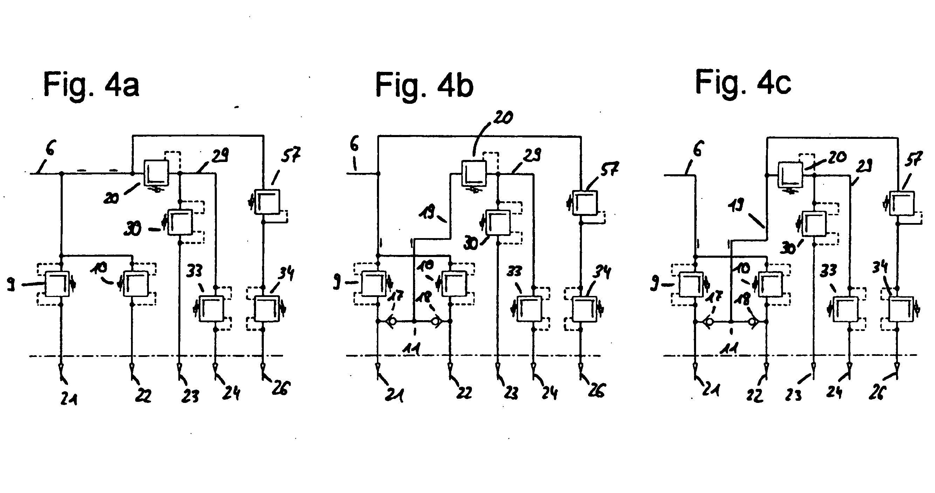

Figur 4a zeigt eine weitere Schaltungsvariante der Schaltungen des ersten und zweiten Ausführungsbeispiels. In der Schaltungsvariante aus Figur 4a sind die Leitungsstränge zu den Betriebsbremsanschlüssen 21, 22 parallel zu den zum Getriebeschaltungsanschluss 26 führenden Leitungsstrang und dem zum Anhängeranschluss 23 und zum Zusatzverbraucheranschluss 24 führenden Leitungsstrang geschaltet. Im Unterschied zu vorhergehenden Schaltungsvarianten ist der zum Getriebeschaltungsanschluss 26 führende Leitungsstrang nicht von der Nebenverbraucherleitung 29 abgezweigt, sondern von der Hauptleitung 6. Zwischen Hauptleitung 6 und Getriebeschaltungsventil 34 ist ein Getriebeschaltungs-Druckbegrenzer 57 zwischengeschaltet. Somit können bei dieser Schaltungsvariante drei verschiedene Druckniveaus ausgebildet werden. Ein erstes Druckniveau herrscht in der Hauptleitung 6 und somit auf der Eingangsseite des Nebenverbraucher-Druckbegrenzers 20 und der Eingangsseite des Getriebeschaltungs-Druckbegrenzers 57. Ein zweites Druckniveau herrscht auf der Ausgangsseite des Nebenverbraucher-Druckbegrenzers 20 und somit auch in der Nebenverbraucherleitung 29. Ein drittes Druckniveau wird auf der Ausgangsseite des Getriebeschaltungs-Druckbegrenzers 57 und somit auch am Getriebeschaltungsanschluss 26 ausgebildet.

Figur 4b zeigt eine weitere Schaltungsvariante der Schaltungen des ersten und zweiten Ausführungsbeispiels. Diese Schaltungsvariante unterscheidet sich von der aus Figur 4a dadurch, dass die Eingangsseite des Nebenverbraucher-Druckbegrenzers 20 nicht mit der Hauptleitung 6 verbunden ist, sondern von der Seriellversorgungsleitung 19 mit Druckluft versorgbar ist. Demnach ist der zum Getriebeschaltungsanschluss 26 führende Leitungsstrang den zu den Betriebsbremsanschlüssen 21, 22 führenden Leitungssträngen parallel geschaltet. Die dem Nebenverbraucher-Druckbegrenzer 20 nachgeschalteten Verbraucher sind den Leitungssträngen nachgeschaltet, welche zu den Betriebsbremsanschlüssen 21, 22 führen. Somit liegt an der Eingangsseite des Nebenverbraucher-Druckbegrenzer 20 erst dann Druckluft an, nachdem die Betriebsbremsventile 9, 10 ein Überströmen von Druckluft zulassen. Bei dieser Schaltungsvariante können drei verschiedene Druckniveaus herrschen. Ein erstes Druckniveau herrscht in der Hauptleitung 6 und somit an der Eingangsseite des Getriebeschaltungs-Druckbegrenzers 57, in den Leitungssträngen zu den Betriebsbremsanschlüssen 21, 22 und an der Eingangsseite des Nebenverbraucher-Druckbegrenzers 20. Ein zweites Druckniveau kann auf der Ausgangsseite des Nebenverbraucher-Druckbegrenzers 20 ausgebildet werden und ein drittes Druckniveau kann auf der Ausgangsseite des Getriebeschaltungs-Druckbegrenzers 57 ausgebildet werden.

Figur 4c zeigt eine weitere Schaltungsvariante der Schaltungen des ersten und zweiten Ausführungsbeispiels. Diese Schaltungsvariante unterscheidet sich von der aus Figur 4b dadurch, dass der zum Getriebeschaltungsanschluss 26 führende Leitungsstrang nicht mit der Hauptleitung 6 verbunden ist, sondern mit der Seriellversorgungsleitung 19 verbunden ist. Dadurch ist der zum Getriebeschaltungsanschluss 26 führende Leitungsstrang mit den dem Nebenverbraucher-Druckbegrenzer 20 nachgeschalteten Verbrauchern parallel geschaltet, jedoch sind all diese Verbraucher seriell zu den Leitungssträngen geschaltet, welche zu den Betriebsbremsanschlüssen 21, 22 führen. Auch bei dieser Schaltungsvariante können drei Druckniveaus ausgebildet werden. Ein erstes Druckniveau herrscht in der Hauptleitung 6 und somit in der Seriellversorgungsleitung 19, ein zweites Druckniveau herrscht auf der Ausgangsseite des Getriebeschaltungs-Druckbegrenzers 57 und ein drittes Niveau herrscht auf der Ausgangsseite des Nebenverbraucher-Druckbegrenzers 20.

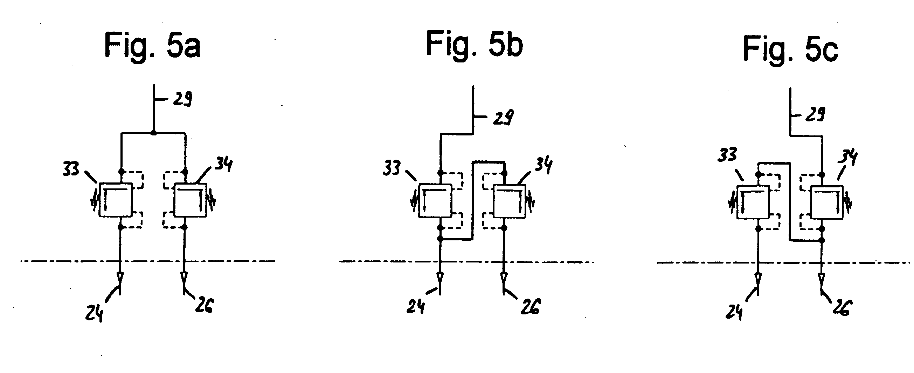

Figur 5a zeigt eine weitere Schaltungsvariante der Schaltungen des ersten und zweiten Ausführungsbeispiels. Bei dieser Schaltungsvariante sind die zum Getriebeschaltungsanschluss 26 und zum Zusatzverbraucheranschluss 24 führenden Leitungsstränge parallel geschaltet, wie bereits in Figur 1 und Figur 2 dargestellt.

Figur 5b zeigt eine weitere Schaltungsvariante der Schaltungen des ersten und zweiten Ausführungsbeispiels. Bei dieser Schaltungsvariante ist die Eingangsseite des Getriebeschaltungsventils 34 mit der Ausgangsseite des Zusatzverbraucherventils 33 bzw. mit den Zusatzverbraucheranschluss 24 verbunden. Somit ist der Leitungsstrang für die Getriebeschaltung dem Zusatzverbraucherventil 33 nachgeschaltet.

Figur 5c zeigt eine weitere Schaltungsvariante der Schaltungen des ersten und zweiten Ausführungsbeispiels. Bei dieser Schaltungsvariante ist die Eingangsseite des Zusatzverbraucherventils 33 mit der Ausgangsseite des Getriebeschaltungsventils 34 bzw. mit den Getriebeschaltungsanschluss 26 verbunden. Somit ist der zum Zusatzverbraucheranschluss 24 führende Leitungsstrang dem Getriebeschaltungsventil 34 nachgeschaltet.

### Bezugszeichenliste:

- 1: Drucklufteingang
- 2: Lufttrocknereinheit
- 3: Entlüftung
- 4: Kompressor-Steuerausgang
- 5: Rückschlagventil
- 6: Hauptleitung
- 7: Reifenfüllventil
- 8: Luftfederungsventil
- 9: Betriebsbremsventil
- 10: Betriebsbremsventil
- 11: Verbindungspunkt
- 12: Fremdbefüllungsanschluss
- 13: Betriebsbremsbehälter
- 14: Betriebsbremsbehälter
- 15: Betriebsbremskreis
- 16: Betriebsbremskreis
- 17: Rückschlagventil
- 18: Rückschlagventil
- 19: Seriellversorgungsleitung
- 20: Nebenverbraucher-Druckbegrenzer
- 21: Betriebsbremsanschluss
- 22: Betriebsbremsanschluss
- 23: Anhängeranschluss
- 24: Zusatzverbraucheranschluss
- 25: Feststellbremsenanschluss
- 26: Getriebeschaltungsanschluss
- 27: Luftfederungsanschluss
- 28: Reifenfüllanschluss
- 29: Nebenverbraucherleitung
- 30: Nebenverbraucherventil
- 31: Rückschlagventil
- 32: Rückschlagventil
- 33: Zusatzverbraucherventil
- 34: Getriebeschaltungsventil
- 35: Elektronische Steuereinheit
- 36: Zentralstecker
- 37: CAN-Bus
- 38: Feuchtestecker
- 39: Heizung
- 40: Temperatursensor
- 41: Drucksensor
- 42: Drucksensor
- 43: Drucksensor
- 44: Drucksensor
- 45: Drucksensor
- 46: Nebenverbraucher-Vorsteuerventil
- 47: Regenerationsventil
- 48: Rückschlagventil
- 49: Drossel
- 50: Ablassventil
- 51: Druckregler-Magnetventil
- 52: Steuerventil
- 53: Ventil
- 54: Druckbegrenzer
- 55: Drossel
- 56: Rückschlagventil
- 57: Getriebeschaltungs-Druckbegrenzer
- 58: Sammelbehälter
- 59: Druckausgleichselement
- 60: Rückschlagventil

## Patentansprüche

1. Druckluftaufbereitungseinrichtung zum Versorgen einer Kraftfahrzeugbremsanlage mit Druckluft, mit
- zumindest einem zur Versorgung einer Betriebsbremsanlage vorgesehenen Betriebsbremsanschluss (21, 22),
- wobei dem Betriebsbremsanschluss (21, 22) ein Betriebsbremsventil (9, 10) vorgeschaltet ist, und
- zumindest einem Ventil (47, 51) zum Steuern eines Regenerationsbetriebs der Druckluftaufbereitungseinrichtung,
**dadurch gekennzeichnet, dass** das zumindest eine Ventil (47, 51) in einem Leitungsstrang angeordnet ist, der zwischen dem Betriebsbremsventil (9, 10) und dem Betriebsbremsanschluss (21, 22) abzweigt.

2. Druckluftaufbereitungseinrichtung gemäß Anspruch 1, **dadurch gekennzeichnet, dass** dem Betriebsbremsventil (9, 10) ein Druckbegrenzer (54) vorgeschaltet ist.

3. Druckluftaufbereitungseinrichtung gemäß einem der vorhergehenden Ansprüche, **dadurch gekennzeichnet, dass** das zumindest eine Ventil (47, 51) ein Magnetventil ist und die Druckluftaufbereitung insgesamt mehrere Magnetventile aufweist, wobei alle Magnetventile in Leitungssträngen angeordnet sind, die zwischen dem Betriebsbremsventil (9, 10) und dem Betriebsbremsanschluss (21, 22) abzweigen.

4. Druckluftaufbereitungseinrichtung gemäß einem der vorhergehenden Ansprüche, **dadurch gekennzeichnet, dass** die Betriebsbremsventile (9, 10) Überströmventile sind.

5. Druckluftaufbereitungseinrichtung gemäß einem der vorhergehenden Ansprüche **dadurch gekennzeichnet, dass** das zumindest eine Ventil (51) eine Steuerleitung zum Öffnen eines Ablassventils (50) schaltet, welches eine Eingangsseite einer Lufttrocknereinheit (2) mit einer Entlüftung (3) verbindet.

6. Druckluftaufbereitungseinrichtung gemäß einem der vorhergehenden Ansprüche **dadurch gekennzeichnet, dass** das zumindest eine Ventil (47) einen Leitungsstrang schaltet, über den der Lufttrocknereinheit (2) Druckluft in entgegengesetzter Richtung zur Druchströmung im Normalbetrieb zugeführt wird.

7. Druckluftaufbereitungseinrichtung gemäß einem der vorhergehenden Ansprüche, **dadurch gekennzeichnet, dass** eine Eingangsseite eines Nebenverbraucher-Druckbegrenzers (20), der weiteren Verbrauchern vorgeschaltet ist, mit dem Betriebsbremsanschluss (21, 22) verbindbar ist.

8. Druckluftaufbereitungseinrichtung gemäß einem der Ansprüche 1 bis 6, **dadurch gekennzeichnet, dass** eine Eingangsseite eines Nebenverbraucher-Druckbegrenzers (20), der weiteren Verbrauchern vorgeschaltet ist, an eine Hauptleitung (6) gekoppelt ist.

9. Druckluftaufbereitungseinrichtung gemäß Anspruch 7 oder 8, **dadurch gekennzeichnet, dass** ein Zusatzverbraucheranschluss (24) und ein Getriebeschaltungsanschluss (26) vorgesehen sind, wobei eine Zuleitung zu dem Zusatzverbraucheranschluss (24) an die Ausgangsseite des Nebenverbraucher-Druckbegrenzers (20) gekoppelt ist und eine Zuleitung zu dem Getriebeschaltungsanschluss (26) mit der Eingangsseite des Nebenverbraucher-Druckbegrenzers (20) verbunden ist.

10. Druckluftaufbereitungseinrichtung gemäß Anspruch 7 oder 8, **dadurch gekennzeichnet, dass** ein Zusatzverbraucheranschluss (24) und ein Getriebeschaltungsanschluss (26) vorgesehen sind, wobei die Zuleitung zu einem der beiden Anschlüsse (24, 26) an eine Ausgangsseite eines Ventils (33, 34) gekoppelt ist, welches dem anderen der beiden Anschlüsse (24, 26) vorgeschaltet ist.

11. Kraftfahrzeug mit einer Druckluftaufbereitungseinrichtung gemäß einem der vorhergehenden Ansprüche.

## Claims

1. Compressed-air processing system for supply of a motor vehicle brake system with compressed air, comprising
- at least one service brake connector (21, 22) provided for supply of a service brake system
- with said service brake connector (21, 22) being provided with an upstream service brake valve (9, 10), and
- at least one valve (47, 51) for controlling a regeneration cycle of said compressed-air processing system,
**characterised in that** said at least one valve (47, 51) is disposed in a string of pipes branching off between said service brake valve (9, 10) and said service brake connector (21, 22).

2. Compressed-air processing system according to Claim 1, **characterised in that** a pressure-limiting valve (54) is disposed upstream of said service brake valve (9, 10).

3. Compressed-air processing system according to any of the preceding Claims, **characterised in that** said at least one valve (47, 51) is a solenoid-operated valve and that the compressed-air processing system comprises several solenoid-operated valve, with all solenoid-operated valves being disposed in strings of pipes branching off between said service brake valve (9, 10) and said service brake connector (21, 22).

4. Compressed-air processing system according to any of the preceding Claims, **characterised in that** said service brake valves (9, 10) are overflow valves.

5. Compressed-air processing system according to any of the preceding Claims, **characterised in that** said at least one valve (51) switches a pump line for opening a discharge valve (50) that connects an inflow side of an air drier unit (2) to a bleed port (3).

6. Compressed-air processing system according to any of the preceding Claims, **characterised in that** said at least one valve (47) switches a string of pipes through which compressed air is supplied to said air drier unit (2) in a direction opposite to the flow direction in normal operation.

7. Compressed-air processing system according to any of the preceding Claims, **characterised in that** an inflow side of a secondary load pressure-limiting valve (20), which is connected upstream of further loads, is adapted to be connected to said service brake connector (21, 22).

8. Compressed-air processing system according to any of the Claims 1 to 6, **characterised in that** an inflow side of a secondary load pressure-limiting valve (20), which is connected upstream of further loads, is coupled to a main pipe (6).

9. Compressed-air processing system according to Claim 7 or 8, **characterised in that** an accessory load connector (24) and a transmission switching connector (26) are provided, with a supply line to said accessory load connector (24) being coupled to the outflow side of said secondary load pressure-limiting valve (20) and with a feeder pipe to said transmission switching connector (26) being connected to the inflow side of said secondary load pressure-limiting valve (20).

10. Compressed-air processing system according to Claim 7 or 8, **characterised in that** an accessory load connector (24) and a transmission switching connector (26) are provided, with the feeder pipe to one of said two connector (24, 26) being coupled to an outflow side of a valve (33, 34) that is placed upstream of the other one of said two connectors (24, 26).

11. Motor vehicle comprising a compressed-air processing system according to any of the preceding Claims.

## Revendications

1. Dispositif de traitement de l'air comprimé, pour l'alimentation d'une installation de freinage d'un véhicule automobile en air comprimé, comprenant
- au moins un raccord (21, 22) de frein de service prévu pour l'alimentation d'une installation de frein de service,
- dans lequel une vanne (9, 10) de frein de service est montée en amont du raccord (21, 22) de frein de service, et
- au moins une vanne (47, 51), pour commander un fonctionnement en régénération du dispositif de traitement de l'air comprimé,
**caractérisé en ce que** la moins une vanne (47, 51) est montée dans un tronçon de conduite, qui bifurque entre la vanne (9, 10) de frein de service et le raccord (21, 22) de frein de service.

2. Dispositif de traitement de l'air comprimé suivant la revendication 1,
**caractérisé en ce qu'**un limiteur (54) de pression est monté en amont de la vanne (9, 10) de frein de service.

3. Dispositif de traitement de l'air comprimé suivant l'une des revendications précédentes, **caractérisé en ce que** la au moins une vanne (47, 51) est une électrovanne et le traitement de l'air comprimé comporte en tout plusieurs électrovannes, toutes les électrovannes étant montées dans des tronçons de conduite qui bifurquent entre la vanne (9, 10) de frein de service et le raccord (21, 22) de frein de service.

4. Dispositif de traitement de l'air comprimé suivant l'une des revendications précédentes, **caractérisé en ce que** les vannes (9, 10) de frein de service sont des vannes de décharge.

5. Dispositif de traitement de l'air comprimé suivant l'une des revendications précédentes, **caractérisé en ce que** la au moins une vanne (51) branche une conduite de commande, pour l'ouverture d'une vanne (50) d'évacuation, qui met un côté d'entrée d'un groupe (2) de sécheur d'air en communication avec une purge (3).

6. Dispositif de traitement de l'air comprimé suivant l'une des revendications précédentes, **caractérisé en ce que** la au moins une vanne (47) branche un tronçon de conduite, par lequel il est envoyé en fonctionnement normal au groupe (2) de sécheur d'air de l'air comprimé dans le sens opposé au courant de passage.

7. Dispositif de traitement de l'air comprimé suivant l'une des revendications précédentes, **caractérisé en ce qu'**un côté d'entrée d'un limiteur (20) de pression de consommateur secondaire, qui est monté en amont d'autres consommateurs peut communiquer avec le raccord (21, 22) de frein de service.

8. Dispositif de traitement de l'air comprimé suivant l'une des revendications 1 à 6, **caractérisé en ce qu'**un côté d'entrée d'un limiteur (20) de pression d'un consommateur secondaire, qui est monté en amont d'autres consommateurs, est couplé à une conduite (6) principale.

9. Dispositif de traitement de l'air comprimé suivant la revendication 7 ou 8, **caractérisé en ce qu'**il est prévu un raccord (24) de consommateur supplémentaire et un raccord (26) de circuit de transmission, une conduite d'amenée étant couplée au raccord (24) de consommateur supplémentaire du côté de la sortie du limiteur (20) de pression de consommateur secondaire et une conduite d'amenée au raccord (26) de circuit de transmission communiquant avec le côté d'entrée du limiteur (20) de pression du consommateur secondaire.

10. Dispositif de traitement de l'air comprimé suivant la revendication 7 ou 8, **caractérisé en ce qu'**il est prévu un raccord (24) de consommateur supplémentaire et un raccord (26) de circuit de transmission, la conduite d'amenée à l'un des deux raccords (24, 26) étant couplée à un côté de sortie d'une vanne (33, 34), qui est montée en amont de l'autre des deux raccords (24, 26).

11. Véhicule automobile ayant un dispositif de traitement de l'air comprimé suivant l'une des revendications précédentes.
